# EUROPEAN PATENT APPLICATION

(11) **EP 4 546 201 A1**
(43) Date of publication of application: **30.04.2025**
(21) Application number: 23846986.0
(22) Date of filing: 26.07.2023
(51) Int. Cl.: G06F 30/20, G06F 30/3308, G06F 30/12, G06F 3/0486, G06F 111/20

(54) **DEVICE AND METHOD FOR DESIGNING/VERIFYING QUANTUM INFORMATION TECHNOLOGY SYSTEM AND IMPROVING USER CONVENIENCE**

(30) Priority: 27.07.2022 KR 20220093529
(71) Applicant: Qsimplus Co., Ltd., Seoul 04534 (KR)
(72) Inventor: NOH, Kwang Seok, Seoul 01429 (KR); SHIN, You Chul, Hanam-si Gyeonggi-do 13013 (KR); HEO, Jun, Seoul 06359 (KR)
(74) Representative: BCKIP Part mbB
(86) International application number: PCT/KR2023/010802
(87) International publication number: WO 2024/025328

(57) **Abstract**

The present invention relates to a device for virtually simulating a quantum communication circuit.

## Description

### TECHNICAL FIELD

The present invention relates to a field of configuring a quantum information system as software by modeling elements/parts/modules used in quantum information technology within a computer program and connecting/arranging them.

### BACKGROUND ART

Modeling refers to a process of converting complex data in the real world into a computer information structure, or converting certain characteristics to easily analyze or design mathematically or using a computer. In the present invention, modeling refers to a process of converting characteristics of elements/parts/modules or the like into an information structure used by a computer, and is used to express the characteristics converted into an information structure, i.e., an output that reflects the characteristics according to input of modeled elements/parts/modules.

A graphical language is a type of computer programming language made to perform arbitrary functions using various functional blocks expressed as a picture, such as NI's Labview, Mathworks' Simulink, and the like. Simulink is mainly used for signal processing, and Labview is very similar to Simulink and also provides functions that facilitate connection to NI hardware.

The graphical language, as well as corresponding simulators (Simulink, Labview), is basically configured as a structure described below.
1. Provides element blocks. An element block represents a result of modeling an element, a function, a module, or the like.
2. Provides element block connections. Information transfer between element blocks can be made through connection of element blocks.
3. Provides setting of input values of element blocks. Output values signal-processed based on the characteristics of the element blocks can be generated by inputting parameter values for previously modeled element blocks.
4. Outputs results. A final or intermediate result output through the connection of element blocks can be transferred to the user in the form of a report, and the characteristic values or parameter input values of each element block can be reported.

### DISCLOSURE OF INVENTION

### TECHNICAL PROBLEM

Existing graphical languages generate problems or functional limitations as described below.
1. Limited element blocks are provided. Although a new element block may be configured by combining previously provided element blocks for the sake of a functional block desired by a user, there is an inconvenience in that the characteristics of each element block that has nothing to do with performing the desired function should be input, and there is a problem in that the characteristics of the desired functional block may not be input directly.
2. Whether the connections between the element blocks can be made is determined using some information such as the data types of the connected element blocks. For example, connection between vector and scalar values is not allowed. When the types of information to be connected are relevant, the element blocks are connected without a problem. This is only matching the interfaces of the element blocks, and whether a normal result is output should be confirmed immediately after the element blocks are connected. However, there is a problem in that since it may not be easy to confirm the result in each stage, it is not easy to find a part where a problem occurs after several element blocks are connected.
3. Input values of element blocks may be input only within a predetermined range. For example, element blocks modeled as a formula such as "linear function" may not have a predetermined range. However, element blocks that perform a specific function may select or input parameter values only within a limited range. In particular, an input that is difficult to be converted into a formula may not be input accurately. For example, in the case of a pulse containing noise, since the noise may not be modeled as a formula, it can be converted only into an approximated formula.

The graphical language reports only a final result for a system configured by combining element blocks. That is, as it reports only the characteristics, input values, and final system results for each stored element, history of modifying unexpected results or the like may not be confirmed. Or, when there are several systems, although the graphical language may compare final results reported, it does not analyze and provide the reasons why the result are different.

### TECHNICAL SOLUTION

To accomplish the above object, according to one aspect of the present invention, there is provided a device for virtually simulating a quantum communication circuit, the device comprising: an input unit for receiving an input value for modeling the quantum communication circuit from a user; an output unit for outputting a model of the quantum communication circuit; and a control unit for simulating the model of the quantum communication circuit, wherein the control unit arranges a plurality of element blocks for modeling the quantum communication circuit on the basis of a signal input through the input unit, connects each of the plurality of element blocks through a cable, sets a plurality of parameter values of the plurality of element blocks and the cables, inputs an input value into at least one first block among the plurality of element blocks, and outputs an output value output through at least one final block among the plurality of blocks, wherein two or more element blocks among the plurality of element blocks are grouped to configure each of one or more modules, one or more setting values are set according to characteristics of each of the one or more modules, the one or more setting values include a module name and a module type determined by input parameters and/or output parameters of the module, and each of the one or more modules is connected to an element block and/or another module on the basis of the module type, the input parameters, and/or the output parameters.

In addition, in the present invention, the input value and output value of each of the one or more modules vary according to the characteristics of the two or more element blocks configuring the module.

In addition, in the present invention, the module type is one among a first type, a second type, and a third type, and the first type, the second type, and the third type are distinguished according to a method of connecting each of the one or more modules to an external element block.

In addition, in the present invention, in the first type, only an input signal of a first element block used as an input of the module among the two or more element blocks configuring the module and an output signal of a last element block used as an output of the module among the two or more element blocks are connected to the external element block.

In addition, in the present invention, the first element block and/or the last element block used as input of the module are configured of at least one element block.

In addition, in the present invention, in the second type, input signals and/or output signals that are not connected between the two or more element blocks among the two or more element blocks configuring the module are connected to the external element block, and some parameters among the parameters of the two or more element blocks are input by the user.

In addition, in the present invention, in the third type, all input signals and/or output signals of the two or more element blocks configuring the module are connected to the external element blocks, and some parameters among the parameters of the two or more element blocks are input by the user.

In addition, in the present invention, the module operates independently and outputs an output signal corresponding to an input signal.

In addition, in the present invention, the parameters of the two or more element blocks configuring the module are input by the user through one input window.

In addition, in the present invention, the number of times of repeatedly executing the one or more modules and blocks that do not configure the one or more modules among the plurality of element blocks is individually set.

In addition, in the present invention, the plurality of parameters is individually set to values input through an individual setting window in each of the plurality of element blocks, or is set through one setting window.

In addition, in the present invention, when the plurality of parameters is set through the one setting window, parameters commonly applied to the plurality of element blocks among the plurality of parameters are set to be the same through one input value.

In addition, in the present invention, the input value of each of the plurality of element blocks is input in a way set by the user.

In addition, in the present invention, each block excluding at least one first block among the plurality of element blocks is an element block selected among at least one candidate element block determined on the basis of at least one piece of information related to a previous block of each block.

In addition, in the present invention, the at least one piece of information includes at least one among parameters, an input value, and an output value of the previous block.

In addition, in the present invention, the control unit outputs an output value of an element block selected by the user among the plurality of element blocks through the output unit.

In addition, in the present invention, there is provided a system for virtually simulating a quantum communication circuit, the system comprising: an input device for receiving an input value for modeling the quantum communication circuit from a user; an output device for outputting a model of the quantum communication circuit; a control device for simulating the model of the quantum communication circuit; and a server for modeling the quantum communication circuit and storing an output value of the simulation, wherein the control device acquires a signal input from the user through the input device, arranges a plurality of element blocks for modeling the quantum communication circuit on the basis of the acquired signal, connects each of the plurality of element blocks through a cable, sets a plurality of parameter values of the plurality of element blocks and the cables, inputs an input value into at least one first block among the plurality of element blocks, and outputs an output value output through at least one final block among the plurality of blocks, wherein two or more element blocks among the plurality of element blocks are grouped to configure each of one or more modules, one or more setting values are set according to characteristics of each of the one or more modules, the one or more setting values include a module name and a module type determined by input parameters and/or output parameters of the module, and each of the one or more modules is connected to an element block and/or another module on the basis of the module type, the input parameters, and/or the output parameters.

### ADVANTAGEOUS EFFECTS

The system for designing/verifying a system using quantum information technology according to the present invention has effects described below.

The present invention may reduce the cost of parts and modules as the development costs are lowered by conducting tests using software instead of hardware (including chips).

The present invention may easily implement element blocks that provide a function desired by a user.

The present invention may perform accurate system design/verification using input values used in an actual environment.

The effects of the present invention are not limited to those mentioned above, and also include other effects that are not explicitly mentioned but can be clearly understood by those skilled in the art from the overall description of the specification.

### BRIEF DESCRIPTION OF THE DRAWINGS

FIG. 1 is an exemplary view showing the configuration of information transmission according to an embodiment of the present invention.
FIG. 2 is a view schematically showing the configuration of a user system including a simulator for quantum communication modeling according to an embodiment of the present invention.
FIG. 3 is a view schematically showing the configuration of a server system including a simulator for quantum communication modeling according to an embodiment of the present invention.
FIG. 4 is an exemplary view showing distortions generated in a pulse waveform according to an embodiment of the present invention.
FIG. 5 is a flowchart illustrating generation of a new element block according to an embodiment of the present invention.
FIG. 6 is a flowchart illustrating presentation of element block candidates according to an embodiment of the present invention.
FIG. 7 is a flowchart illustrating picture input processing according to an embodiment of the present invention.
FIG. 8 is a view showing an optical cable input parameter window according to an embodiment of the present invention.
FIG. 9 a view showing an example of confirming values after changing parameters of a block located in the middle according to an embodiment of the present invention.
FIG. 10 is a view showing a method of inputting parameters through a method of modifying a picture according to an embodiment of the present invention.
FIG. 11 an exemplary view showing (a) input parameters of individual element blocks and (b) integrated input parameters according to an embodiment of the present invention.
FIG. 12 is a view referenced in explaining other examples of an equivalent circuit model associated with the quantum communication circuit shown in FIG. 10 according to an embodiment of the present invention.
FIG. 13 is a flowchart exemplarily illustrating a simulation method of a quantum communication circuit according to an embodiment of the present invention.
FIGS. 14 and 15 are views showing an example of generating/registering a module configured of one or more element blocks for simulation of a quantum communication circuit according to an embodiment of the present invention.
FIG. 16 is a view showing an example of a specific type of a module according to an embodiment of the present invention.
FIG. 17 is a flowchart illustrating an example of a method of using a module according to an embodiment of the present invention.
FIG. 18 is a view showing an example of a method of setting parameters of internal element blocks of a module according to an embodiment of the present invention.
FIG. 19 is a flowchart illustrating an example of a method of modifying a module according to an embodiment of the present invention.
FIGS. 20 and 21 are views showing an example of a method of setting the number of repeated executions of a module according to an embodiment of the present invention.

### BEST MODE FOR CARRYING OUT THE INVENTION

Hereinafter, preferred embodiments of the present invention will be described in detail with reference to the accompanying drawings. The advantages and features of the present invention and the methods for achieving them will become apparent with reference to the embodiments described below in detail together with the accompanying drawings. However, the present invention is not limited to the embodiments disclosed below, and may be implemented in various different forms, and the present embodiments are provided only to make the disclosure of the present invention complete and to fully inform those skilled in the art of the scope of the invention, and the present invention is defined only by the scope of the claims. Like reference numerals refer to like elements throughout the specification.

Unless otherwise defined, all terms (including technical and scientific terms) used in this specification may be used as a meaning that can be commonly understood by those skilled in the art. In addition, terms defined in commonly used dictionaries are not ideally or excessively interpreted unless explicitly and specially defined. The terms used in this specification are for describing the embodiments and are not intended to limit the present invention. In this specification, singular forms also include plural forms unless specifically stated in the phrase.

The terms "comprises" and/or "comprising" used in the specification mean that the mentioned components, steps, operations, and/or elements do not exclude the presence or addition of one or more other components, steps, operations and/or elements.

A device for designing and verifying a quantum information technology system of the present invention operates based on modeled element blocks. The modeled element blocks may be part or all of the components of the quantum information technology system, and larger element blocks may be formed by combining the element blocks. The element blocks will be expressed to be divided into functional units for easy explanation. Accordingly, an element block may include element blocks that model parts/elements/modules, and modeling a combination of the parts/elements/modules may also be expressed as an element block.

Basic terms such as drag, item selection, double-click, and the like generally used in graphical languages are not separately defined in the present invention, and may be redefined as needed. Although the element block modeling process, element block connection, or the like may be executed by using a mouse or touching the screen, explanation of subsidiary processes will be omitted to focus on the process of generating new element blocks, which is the main purpose of the present invention.

A simulator generally means a processing device for deriving a final result using a specific language, and in the present invention, it refers to a processing device that derives a final result using element blocks based on a graphical language.

Hereinafter, a method of modeling element blocks and configuring a quantum information technology system according to an embodiment of the present invention will be described in detail with reference to the accompanying drawings. As the present invention can be modified in various ways and may have various forms, specific embodiments will be illustrated in the drawings and described in detail in the specification. However, this is not to limit the present invention to a specific disclosed form, and it should be understood that it includes all modifications, equivalents, or substitutes included in the spirit and technical scope of the present invention.

The terms used in this application are used only to describe specific embodiments and are not intended to limit the present invention. Singular expressions include plural expressions unless the context clearly indicates otherwise. In this application, it should be understood that the terms "include", "have", and the like are intended to specify the presence of a feature, a number, a step, an operation, a component, part, or a combination thereof described in the specification, and do not exclude in advance the possibility of the presence or addition of one or more other features, numbers, steps, operations, components, parts, or combinations thereof.

Unless defined otherwise, all terms used herein, including technical or scientific terms, have the same meaning as commonly understood by those skilled in the art. Terms defined in commonly used dictionaries should be interpreted as having a meaning consistent with the meaning they have in the context of related arts, and will not be interpreted in an ideally or excessively formal sense unless explicitly defined in this application.

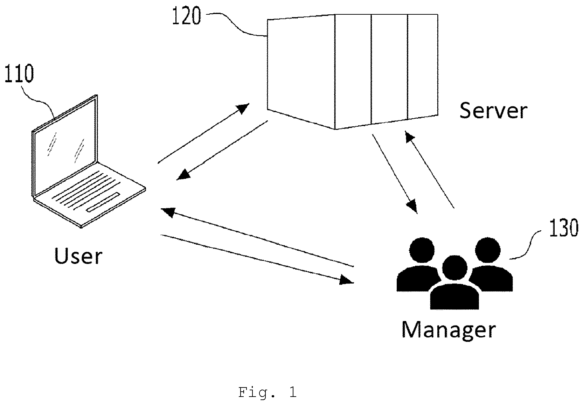

FIG. 1 is an exemplary view showing the configuration of information transmission according to an embodiment of the present invention.

Referring to FIG. 1, when information for virtually simulating a quantum communication circuit is transmitted, a user 110 is a subject who uses a graphical language, i.e., a subject who performs verification on the design of a system, such as generating new element blocks and modules through an input using an input device, connecting the modules and element blocks, and inputting parameter values of the modules and element blocks through the input device (or input unit).

The server 120 may be in charge of storing and processing information on a simulator of a quantum information technology system, such as storing information on new modeling element blocks, providing and confirming valid connections when connecting the element blocks, and generating output results of the system. At this point, the server may be divided into a server in charge of storing information on new modeling element blocks and information on a simulator for the system, and a control device in charge of information processing of a simulator for the quantum information technology system, such as providing and confirming valid connections when connecting element blocks, and generating output results of the system.

A manager 130 is a subject of monitoring operations of the user and the server, directing operations of the user and the server, and maintaining the system.

Information may be exchanged between the members, and the user may store information used by the simulator, such as new block generation information, element block connection information, input parameter values, and the like, or the simulator may be located in the server so that corresponding information may be stored only in the server. The subject that operates the simulator may be the user, the server, or both the user and the server. That is, the simulation may be executed only on the computer of the user, or the user may connect to the server and execute simulation on the server. Or, some functions may be performed on the user's computer, and the other functions may be performed on the server, and execution results may be transmitted to the user or the server.

Hereinafter, for convenience of explanation, it is described as an example that the user is designated as the simulation execution subject and the server may function only as a joint execution subject together with the user. When the user connects to the server and executes a simulator stored in the server, the simulation execution subject may be the server, but since only some of the information transmitted between the user and the server is changed and the main purpose of the invention is not damaged, the simulation execution subject is exemplified as the user.

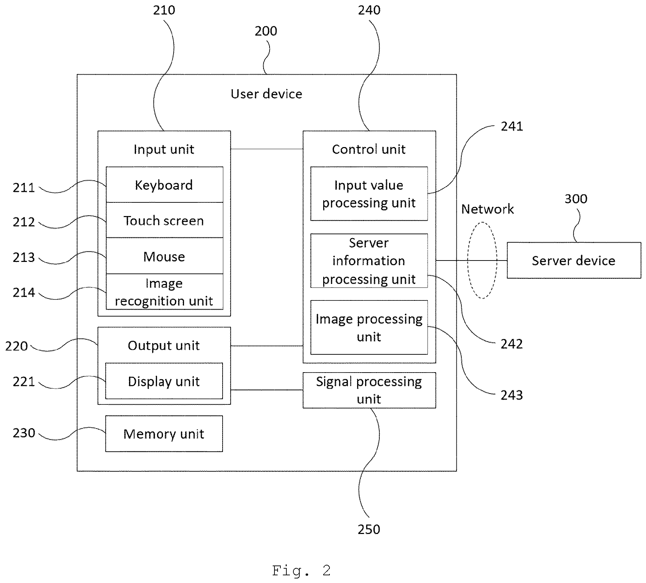

FIG. 2 is a view schematically showing the configuration of a user system including a simulator for quantum communication modeling according to an embodiment of the present invention.

Referring to FIG. 2, a user system may be configured of a user device 200 and a server device 300, and the user device 200 and the server device 300 may be connected through a network. At this point, the server device 300 may be configured of a server (not shown) that stores models, modules, element blocks, input values, and output values generated for simulation through quantum communication modeling, and a control device (or processor device, not shown) for processing simulation through the models, modules, element blocks, and input values.

An input unit 210 is a device unit for receiving information from the user, and may include a user input unit (e.g., a keyboard device 211, a touch screen 212, a mouse 213, or the like), and documents containing data and specifications of the elements/parts/modules, actual input and output pictures used in hardware experiments, and the like may also be input through an image recognition unit 214.

An output unit 220 is a device unit that displays user input or results of processing the user input, and may display them through a display unit 221 such as a monitor or a touch screen.

A memory unit 230 may store information used by the simulator, such as information on the generated element blocks, connection of the element blocks, input parameter values, system configuration diagrams, output results, and the like. The memory unit 230 may transmit and receive or share some or all of the stored information with the server device 300 through a network. it is possible to store and read from the memory in all situations within the system, such as when information is transmitted or a signal is processed, and the time point of storing or reading is not specified below for convenience.

A control unit 240 represents a processing unit for processing simulator input, and each detailed function is as described below.

An input value processing unit 241 recognizes or distinguishes input of the input unit 210, connects the input value to a modeled element block, and stores it in the memory unit 230.

A server information processing unit 242 processes information to be transmitted to the server, or processes information received from the server and transmits the processed information to the output unit 220 or an image processing unit 243.

The image processing unit 243 performs a processing function for configuring element blocks on the screen and displaying arrangement of the element blocks on the output unit, and provides a function of distinguishing element blocks by generating an object name for each element block.

A signal processing unit 250 progresses operations such as signal processing on the characteristics of selected element blocks and input of the element blocks, and transmits a result to the output unit.

Even when the user connects to the server and uses it as a terminal, the user system may operate without deviating from its original purpose although the role of each functional unit may be reduced or expanded.

The server device 300 stores and processes information on the simulator for a quantum information technology system, such as storing information on new modeling element blocks received from the user, providing and confirming valid connections when connecting the element blocks, and generating output results of the system. The server device 300 may have a larger memory unit or higher processing performance than the user device 200, and may also be used as an auxiliary device for expanding the functions of the user device and improving the processing performance.

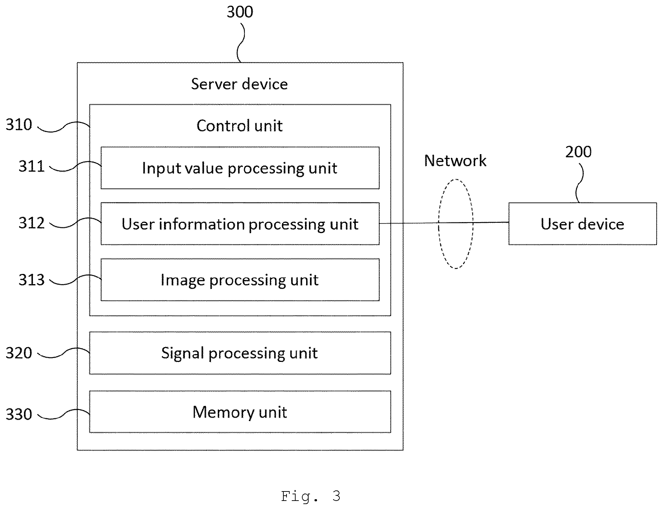

FIG. 3 is a view schematically showing the configuration of a server system including a simulator for quantum communication modeling according to an embodiment of the present invention.

The control unit 310 performs a function similar to that of the control unit 240 of the user device. It represents a processing unit for processing information in the server, and each detailed function is as described below.

An input value processing unit 311 recognizes or distinguishes input from a user device, connects the input value to a modeled element block, and stores it in the memory unit 330. Alternatively, it provides a function of processing documents containing data and specifications of the elements/parts/modules, actual input and output pictures used in hardware experiments, and the like.

A user information processing unit 312 processes information to be transmitted to the user, or processes information received from the user and transmits processed information to the user.

An image processing unit 313 provides a function of distinguishing element blocks by generating an object name for each element block.

A signal processing unit 320 progresses operations such as signal processing on the characteristics of selected element blocks and input of the element blocks, and transmits a result to the user device 200.

A memory unit 330 may store information used by the simulator, such as information on the generated element blocks, connection of the element blocks, input parameter values, system configuration diagrams, output results, and the like, or user information. Information on the element blocks generated by a plurality of users may be distinguished using object names generated by the image processing unit, and the user information processing unit 312 may use information on the element blocks generated by other users and stored in the memory unit or previously stored information on element blocks, as well as the user information.

The memory unit 330 may transmit and receive or share some or all of the stored information with the user device 200 through a network.

Even when the user connects to the server and uses it as a terminal, the user system may operate without deviating from its original purpose although the role of each functional unit may be reduced or expanded.

Although functions that can be performed in the user device and the server device have been described above, when a function conflict occurs, smooth operation may be performed by removing or adding functions from or to the user or server device.

Network devices that support network transmission between the server and user devices may use wired and wireless Internet, mobile communication techniques such as Long-Term Evolution (LTE), Long Term Evolution-Advanced (LTE-A), and 5G (Fifth Generation), and the like.

The server device 300 may perform information transfer with a plurality of user devices.

Generating a new element block relates to generating an element block that does not exist in the user device or the server device, and may include adding new properties to an existing element block.

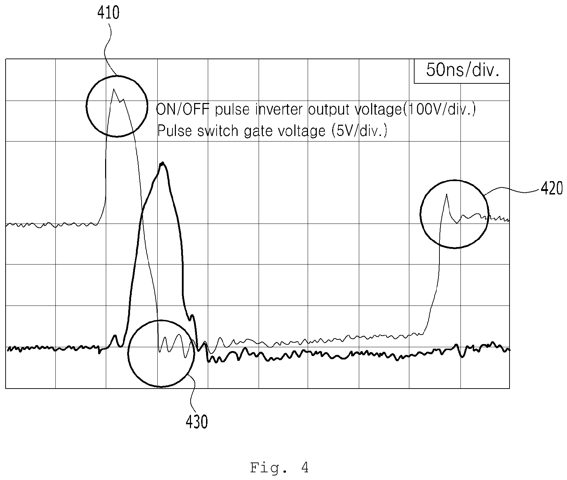

FIG. 4 is an exemplary view showing distortions generated in a pulse waveform according to an embodiment of the present invention.

FIG. 4 is an exemplary view showing distortions 410, 420, and 430 generated in a pulse waveform. Although a result without distortion is expected, actual parts/elements/modules may produce a result as shown in FIG. 4. Although existing graphical languages may visualize some distortions, they may not accurately express an output as shown in FIG. 4.

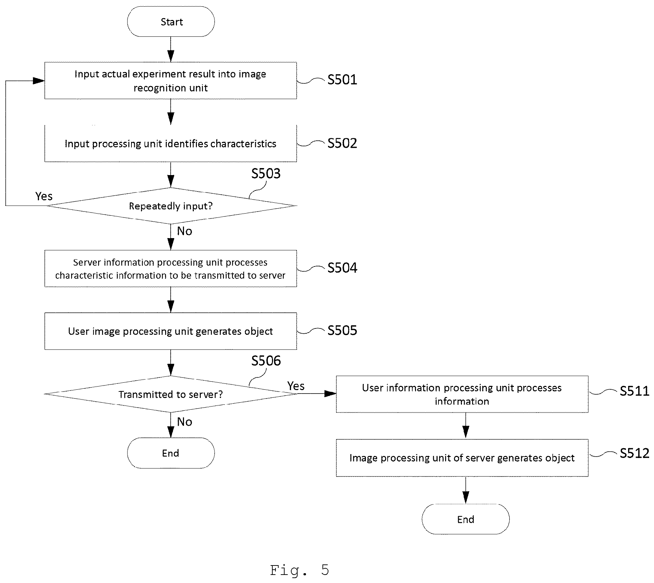

FIG. 5 is a flowchart illustrating generation of a new element block according to an embodiment of the present invention.

Referring to FIG. 5, a video or image files may be input and output as an actual result of experiment.

Specifically, the user device may receive an actual experiment result through a recognition unit (S501). For example, a result as shown in FIG. 4 may be input through an image recognition unit of the user device, and characteristics of the input actual experiment result may be extracted through the processing unit (S502). The result obtained through repeated experiments on the same part/element/module may be input and designated as the output characteristics of one element block, and the result may be utilized in various ways, such as stochastically modeling the characteristics through signal processing or machine learning.

Thereafter, additional inputs or the same inputs may be input repeatedly, and in this case, characteristics may be extracted through S501 and S502.

Thereafter, information to be registered in the server or characteristics to be registered in the user image processing unit 243 may be converted into information (S504). In order to use the new element block generated in this way, an object may be generated through the user image processing unit (S505).

Thereafter, the generated object and/or new element block (or characteristic information or the like) may be transmitted to the server (S506), and the characteristic information transmitted to the server may be processed for object generation within the server (S511, S512).

In addition to the result characteristics, specifications or performance graphs indicated in the specifications of the parts/elements/modules may be used as an input of the image recognition unit, and may be input in the form of a file that is easy to recognize, such as jpg, pdf, or the like.

At S502, characteristics may be automatically extracted in a manner specified by the user or the server, and at this point, the user may select or change some of the extracted characteristics by specifying a method for extracting required characteristics.

In order to add the result characteristic as shown in FIG. 4 to an existing element block, the characteristic may be added through an existing block update process rather than generating a new block. An existing block update process may perform the same process as shown in FIG. 5 after selecting an element block to be updated. At S505 and S512, an object may be generated as a new element block distinguished from an existing element block.

In an existing simulator, whether the connections between the element blocks can be made is determined using some information such as the data types of the connected element blocks. For example, connection between vector and scalar values is not allowed, and when the types of information to be connected are relevant, the element blocks are connected without a problem. This is only matching the interfaces of the element blocks, and whether a normal result is output should be confirmed immediately after the element blocks are connected.

The present invention proposes a method of connecting new element blocks, and when input or the like of parameter values of the corresponding element block is completed for the last element block, of which the connection is to be added, candidate element blocks that may use a corresponding element are presented on the screen. Accordingly, it is easy to know a change in the configuration of the element blocks within the system and the parameter values of the element blocks, according to the candidate element blocks that are shown, as well as the element block of which the connection is added.

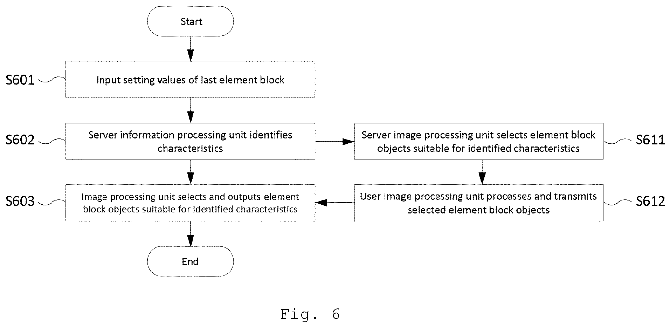

FIG. 6 is a flowchart illustrating presentation of element block candidates according to an embodiment of the present invention.

Referring to FIG. 6, when an element block for modeling a quantum communication circuit is added, the element block to be added may be selected based on at least one piece of information related to a previous element block. That is, candidate element blocks may be determined based on at least one among a parameter, an input value, and an output value of the previous element block, and at least one element block among the determined candidate element blocks may be selected, and the selected at least one element block may be added to be connected to the previous element block.

Specifically, in order to determine candidate element blocks of the added element block, setting values (e.g., object name, parameters, input values, and/or output values) of the last element block may be input (S601), and the characteristics of the element block can be identified by the server information processing unit on the basis of the setting values of the last input element block.

Thereafter, candidate element block objects suitable for the characteristics identified by the image processing unit may be determined (or selected) (S603), and candidate element block objects suitable for the characteristics identified by the server image processing unit may be determined (or selected) (S611).

The candidate element block objects selected based on the characteristics identified by the server image processing unit may be transmitted after information processing is performed on the candidate element block objects selected by the user information processing unit (S612).

That is, except the candidate element block objects determined at S603, the candidate element block objects selected based on the characteristics identified by the server image processing unit may be transmitted.

At S602, characteristics that determine an element block to be added may be identified using the object names and input values of element blocks before the last element block, as well as the setting values of the last element block.

When the invention described above is used, in addition to presenting additional element block candidates, some of the characteristics of the added element block may not be used, or input values may be restricted.

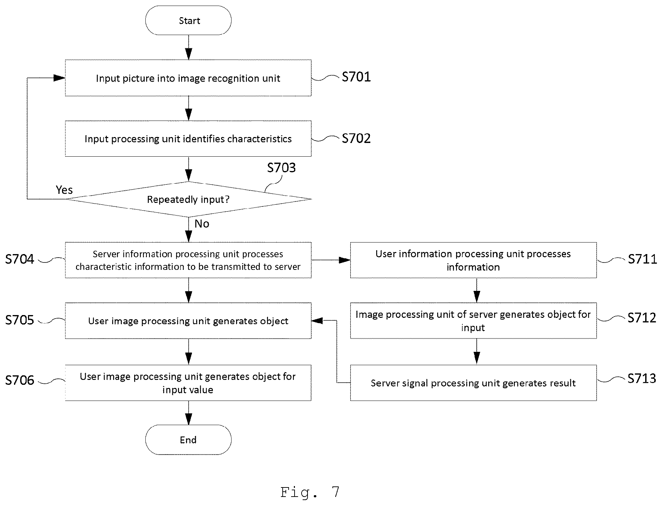

As described above in the problem section, the existing simulator may input element block parameter values only within a predetermined range. In particular, an input difficult to convert into a formula may not be accurately input. For example, when the result of the new element block generated through FIG. 5 is as shown in FIG. 4, the input of the next element block becomes as shown in FIG. 4. Accordingly, input as shown in FIG. 4 can be processed as shown in FIG. 7, and it shows an example of inputting as a picture.

FIG. 7 is a flowchart illustrating picture input processing according to an embodiment of the present invention.

Referring to FIG. 7, when an image described in FIG. 4 is input, an object for the input value may be generated by identifying the characteristics.

Specifically, when an input value of an image or graph form as described in FIG. 4 is input through the image recognition unit (S701), characteristics of the input value are identified by the input processing unit (S702), and the portions that should be transmitted to the server or signal-processed in itself can be classified through the server information processing unit 242 (S704, S711).

At this point, when there is an additional input value (an image, a graph or the like output through a simulation) or a repetitive input (S703), the characteristics are identified through S701 and S702, and the portions that should be transmitted to the server or signal-processed in itself can be classified through the server information processing unit 242.

Thereafter, each transmitted or classified portion may be processed by the user image processing unit to generate an object, or the portion transmitted to the server may be used to generate an object for the input through the image processing unit of the server (S705, S712). Thereafter, the object generated by processing in the server may be used to generate a result value (or output value) through the signal processing unit of the server (S713).

At S711, whether a corresponding input exists in the memory as an object is searched, and when it does not exist, and a new object is generated at S712, and the operation can be performed directly at S713 without performing S712.

Although the image processing unit 243 of the user may generate an object by analyzing the input value in itself, an object may also be generated by copying the generated object information from the server.

Previously, results of a configured system or element block setting values of the configured system may be summarized and output. However, in the present invention, history of change in the element block setting values may be stored so that directions for system configuration can be presented with reference to the setting values other than the final setting values. Through the function like this, the influence of changing the element block or element block parameter values of the configured system can be easily identified.

Using this, a plurality of systems can be generated by inputting a plurality of final setting values for one system, and output values with respect to various inputs may be compared among the systems.

An element block generated in the present invention may be processed as a black box when disclosure to the outside is not desired. That is, although designated users may view the characteristics of the element block, other users may be restricted from the characteristics.

Previously, lines connecting the element blocks are lines for transmitting signals, and only data types for connecting the element blocks are considered. However, in optical communications or quantum information technology, when element blocks are connected using optical cables, the features, length, and degree of twisting of the optical cables have a significant impact on signal transmission. Accordingly, in the present invention, the optical cables are also treated as an element block.

Due to the characteristics of the optical cable itself, optical cables may be treated as an element block having input and output, like other element blocks. In addition, as the optical cables perform a function of connecting element blocks, their shape may be different from those of other element blocks.

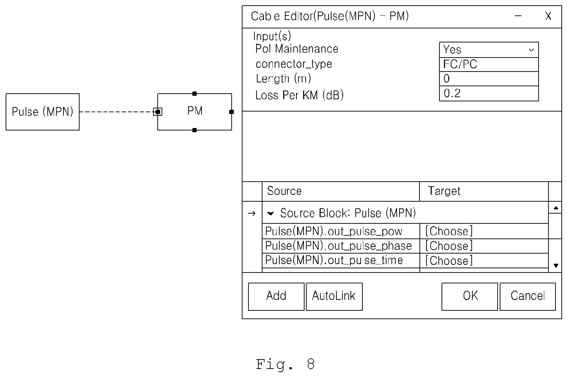

FIG. 8 is a view showing an optical cable input parameter window according to an embodiment of the present invention.

FIG. 8 shows an example of an optical cable input parameter window, which allows input of various parameters such as Pol Maintenance, as well as performing a function of connecting the Pulse block and the PM block. In addition, FIG. 8 shows the variable name of a preceding block among the connected blocks, i.e., the output variable name, and allows selection of the variable name of the next block to be connected. At this point, variable names of element blocks that do not need to be connected therebetween may not be connected.

The optical cable may automatically map variables of connected blocks, and a mapping-related function such as automatically connecting parameters having the same variable name may be used through the AutoLink function by pressing the Autolink button shown in FIG. 8.

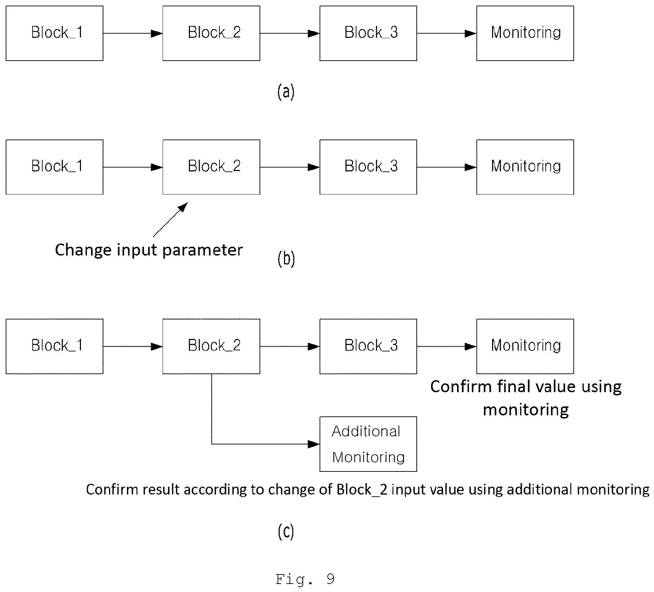

FIG. 9 a view showing an example of confirming values after changing parameters of a block located in the middle according to an embodiment of the present invention.

Generally, existing GUI-based simulators such as Simulink may monitor values through execution after arranging blocks and inputting parameters of each block is completed, as shown in FIG. 9(a).

When the input parameter of Block_2 block located in the middle is changed as shown in FIG. 9(b), in order to identify the effect of the change in the parameter, the final result value may be confirmed using a monitoring block, or the value according to the change in the input value of Block_2 block may be confirmed by adding the monitoring block to the Block_2 block as shown in FIG. 9(c).

The present invention allows individual execution of the element blocks. When the input value of the Block_2 block is changed, 1) the simulation is executed again and the final value may be confirmed by the monitoring block as before, and 2) only the result value of Block_2 due to the change in the parameters may be confirmed through individual execution of the Block_2 block. At this point, the individual execution is performed only up to the corresponding block, and the Block_3 block is not executed. That is, when the Block_2 block is individually executed, the Block_1 block and the Block_2 block, which should be executed before the corresponding block, are executed, and individual execution results are output. At this point, when the result of the Block_1 block is already stored in the Block_2 block, the Block_2 block may be executed immediately without executing the Block_1 block again, and output the same result.

The result value may be changed by performing individual execution by pressing the Run button after changing the input value of PM_1 block in the middle of block arrangement from 90,90,90,90 to 180,180,180,180. To facilitate input of the user, a corresponding value may be input in the parameter name of the input window as shown in FIG. 8 or may be directly input in the picture reflecting the block characteristics.

The parameter input method may include a text input method of inputting text at a position where the parameter name is shown as text, and a method of inputting parameter features as characters or a picture. At this point, when parameters are input in the method of text input or picture input, it may also be expressed in other ways immediately. That is, when the parameter features are input through the text input, it may be expressed as picture input immediately, and when the parameter characteristics are input through the picture input, it can be expressed as text input immediately.

Alternatively, some parameters may be input through picture input and the other parameters may be input through text input by mixing the two methods.

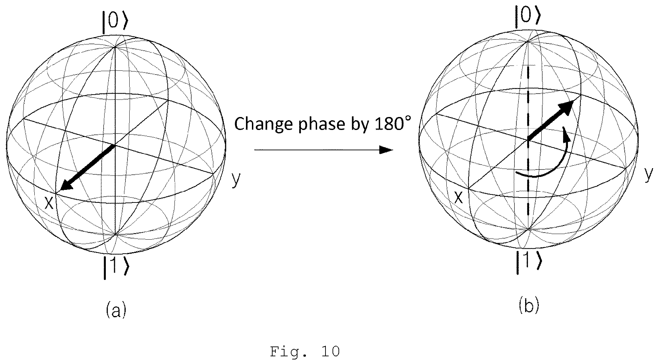

FIG. 10 is a view showing a method of inputting parameters through a method of modifying a picture according to an embodiment of the present invention.

Referring to FIG. 10, some parameters may be input through a picture and the other parameters may be input through text.

Specifically, as shown in FIG. 10, in order to change the phase of a quantum qubit, a 180° phase change input may be performed by rotating the red arrow indicating the current phase as shown in (a) in the 3D picture to be changed as shown in (b) using a mouse or the like.

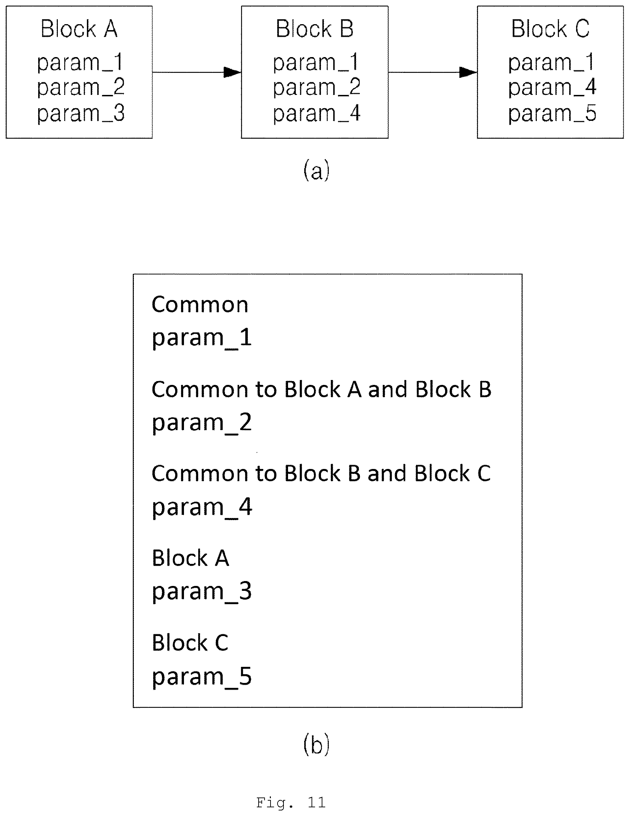

FIG. 11 an exemplary view showing (a) input parameters of individual element blocks and (b) integrated input parameters according to an embodiment of the present invention.

Referring to FIG. 11, when a plurality of element blocks is used, parameters should be input for each element block, but input parameters of each element block may be collectively input by providing an overall parameter input window.

Specifically, FIG. 11(a) shows an example of parameters to be input into individual element blocks, and FIG. 11(b) shows an example of a window where input parameters of the used element blocks are gathered in one place, an example of displaying common parameters to minimize parameter input, and an example that corresponding parameters can be input. Input of individual element blocks may be performed in an all-parameter input window as needed.

For convenience of user input, parameters may be automatically recognized and input by the computer, instead of directly inputting, using images or the like captured from documents or the like.

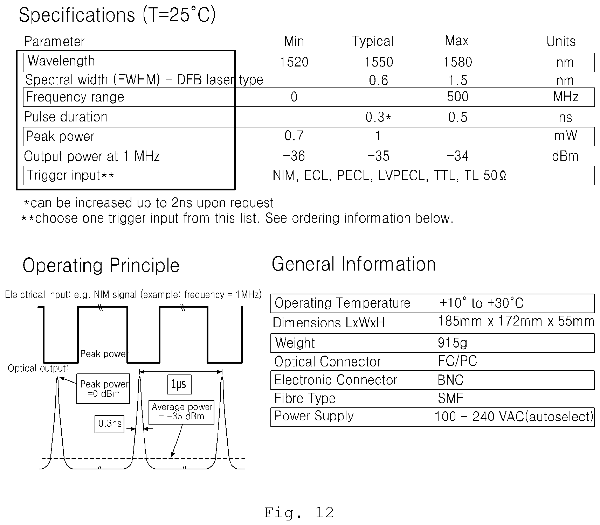

FIG. 12 is a view referenced in explaining other examples of an equivalent circuit model associated with the quantum communication circuit shown in FIG. 10 according to an embodiment of the present invention.

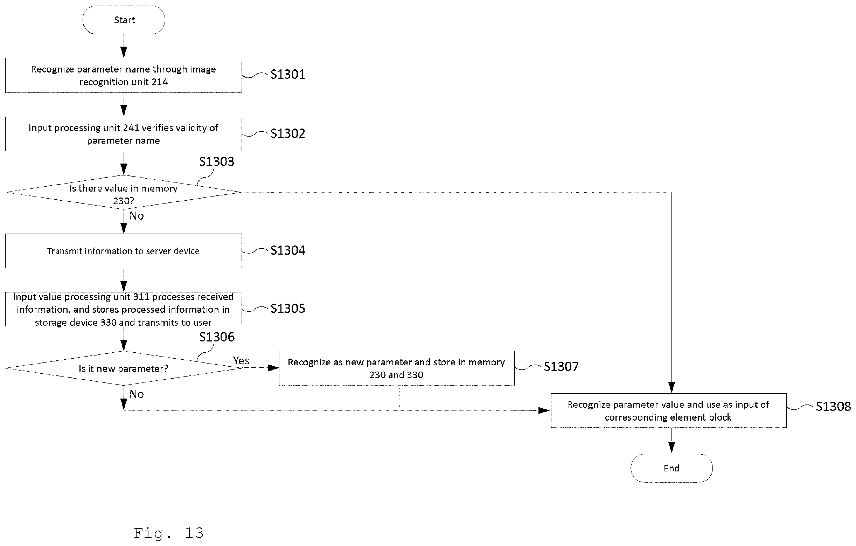

In FIG. 12, required parameters in the datasheet of actual elements of an element block are indicated in the box. The box may be determined by comparing and selecting parameters stored in the server device 300 using image processing, machine learning, AI, or the like, and the specific operation is as shown in FIG. 13.

FIG. 13 is a flowchart exemplarily illustrating a simulation method of a quantum communication circuit according to an embodiment of the present invention.

Referring to FIG. 13, after recognizing the parameter name and value in the information received through the image recognition unit 214, the input value processing unit 241 confirms whether there is related information in the memory unit 230 to verify validity of the parameter name, and when there is a value, it confirms that the corresponding parameter name is valid and uses the recognized value as the input parameter name and value of the element block. When there is no related information in the memory unit, the input value processing unit 241 may transmit the corresponding parameter name and value to the server device 300, process information received from the input value processing unit 311 in the server device, and then store the processed result in the memory unit 330 or transmits the processed information to the user. The processed result may be used as an appropriate input parameter name and value of the element block.

When it is a new parameter that has not been processed before, it is recognized as a new parameter and stored in the user and server memory 230 and 330, and then used as an input of the element block as a new parameter.

At this point, the element blocks, as well as the parameter names and values, may be distinguished through image processing.

For example, the method shown in FIG. 13, such as distinguishing the parameter name when the element block name is included in the image or the element block can be specified by several parameters, can be used. That is, as the element block name is recognized or the parameter name is recognized through the image recognition unit at S1301, the element block may be specified through verification of validity at S1302. The process thereafter may proceed in a way similar to that of recognizing the parameter name.

When there is no parameter name, the process of recognizing an image that expresses the characteristic and mapping the characteristic to a parameter name is also similar to the process of processing the element block name. A parameter value and an image in which the parameter value is indicated are recognized at S1301, and a parameter name that matches the image is mapped at S1702. At this point, procedures thereafter, such as confirming whether the parameter name to be mapped is in the memory in S1303, are similar.

The simulation screen of the simulator for simulation through modeling of a quantum communication circuit may be output to the user through the output unit in the form of text, image, or the like.

The simulation screen is partitioned into at least three sub-areas, which may be configured of Toolbox, Menu bar, Workspace, Property, and/or Console.

The toolbox is an area in which a plurality of element items one-to-one related to a plurality of element blocks that can be used for modeling a quantum communication circuit is displayed. The plurality of element items may be arranged in a tree structure, and each element item may be displayed in the form of a unique name or icon to be distinguished from other element items.

The menu bar is an area in which a plurality of connection line items one-to-one related to a plurality of block connection lines that can be used for modeling a quantum communication circuit is displayed. Each connection line item may be displayed in the form of a unique name or icon to be distinguished from other connection line items.

The workspace is an area in which element items selected from the toolbox and block connection lines selected from the menu bar are arranged, which displays the virtual modeling process of a quantum communications circuit to the user.

Element blocks for modeling a quantum communication circuit in the list of the toolbox may be moved to the workspace in a dragging and dropping method, and connected through a connection line (or cable) selected from the menu bar. In this case, when a system is generated through the element blocks and simulation is performed, there are occasions in which the same element block is used in several points of the model for simulation or operation should be performed repeatedly.

In this case, when a module is generated by grouping blocks using these element blocks and the generated module is used as a single block, simulation may be performed efficiently by simplifying modeling of the overall simulation.

The module like this may be generated by grouping element blocks that perform similar functions and element blocks that perform different functions, as well as identical element blocks.

In addition, a module may be connected to external block elements in different ways according to the type. A module may have one or more setting values according to the characteristics, and the one or more setting values may include a module name, and a module type according to input parameters and/or output parameters of the module, and a module may be connected to element blocks and/or other modules on the basis of module type, input parameters, and/or output parameters.

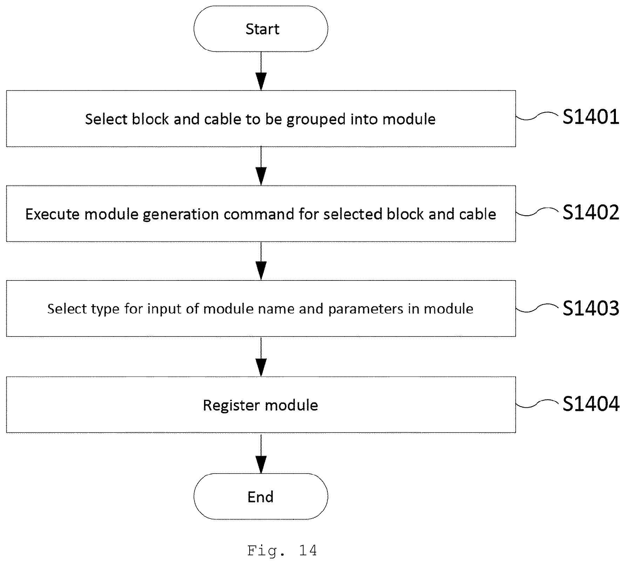

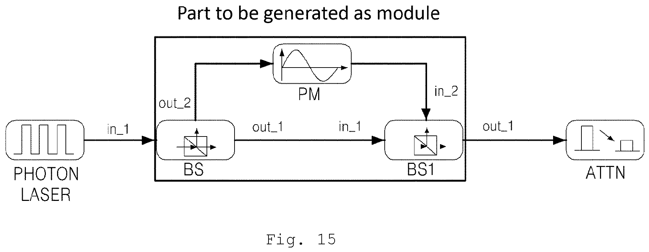

FIGS. 14 and 15 are views showing an example of generating/registering a module configured of one or more element blocks for simulation of a quantum communication circuit according to an embodiment of the present invention.

Referring to FIG. 14, a module may be generated by grouping element blocks for the sake of modeling for simulation of a quantum communication circuit.

Specifically, element blocks and connection lines (or cables) to be grouped into a module may be selected (S1401). That is, targets (element blocks and cables) to be generated as a module may be selected. Element blocks and/or cables to be generated as a module may be selected by dragging of a mouse, or target block elements and/or cables to be generated as a module may be specified. For example, as shown in FIG. 15, BS, BS1, and PM element blocks and cables connecting these element blocks may be selected to generate a module. At this point, the element blocks and/or cables configuring a module are one or more.

Thereafter, a module generation command for the selected element blocks and cables may be executed (S1402). For example, an item may be selected from a menu popped up after right-clicking the mouse on the selected element block and/or cable, or a module generation menu may be selected from the menu bar.

When a module is generated through the module generation command, characteristics of the module may be set (S1402). That is, when a module is generated, characteristics indicating the features of the module (e.g., module name, type for parameter input within the module, etc.) may be set (S1403).

When characteristics of the module are set, the module having the set characteristics may be registered in the tool box (S1404). The module generated by setting characteristics may be registered in the tool box to be used later. At this point, when the user selects whether or not to register through the input device (or input unit), or when automatic registration is set through the setting, it may be automatically registered even without user's selection. When the automatically generated module is registered, the generated module may be confirmed through the module folder in the tool box.

Through the method as described above, a module configured of a plurality of element blocks and cables may be generated and stored.

After the module is generated, its characteristics may be set at step S1402. For example, when a module is clicked (or double-clicked) for the first time after being generated, a window for inputting the characteristics of the module may be popped up.

A window for setting the name of a module desired to be generated and the parameter export type of the module may be popped up on the window for inputting the characteristics of the module. The window for inputting the characteristics of the module may also have various input items for indicating the characteristics of the module. The characteristics of the module may be changed when the module is modified, as well as when the module is generated.

The parameter export type of the module may be distinguished according to the connection method of the module with external element blocks when the module is used. That is, the parameter export type may indicate input/output signal information or a parameter input method within a module that can be connected to external element blocks of the module when modeling of a quantum communication circuit is designed using the module. Accordingly, the input/output signal information or the parameter input method of the module may be set variously according to the parameter export type.

Specifically, when a module is configured of a plurality of element blocks, the parameter export type of the module may be distinguished according to whether the connection method between the plurality of configured element blocks and external element blocks connects only the input/output signals of the module, whether input/output signals of some element blocks within the module, as well as the input/output signals of the module, can be connected to the external element blocks, or whether input/output signals of all element blocks configuring the module, as well as the input/output signals of the module, can be connected to the external element blocks.

That is, when a module is configured, input signals and output signals of the module may vary according to the characteristics of the element blocks configuring the inside of the module. Accordingly, when a module is used, there may be a type (first type) in which only input signals and output signals of the module may be connected to external element blocks regardless of the internal connection between the element blocks configuring the module, a type (second type) in which input signals or output signals of some element blocks configuring the inside of the module may be connected to element blocks outside the module, or a type (third type) in which input signals or output signals of all element blocks configuring the inside of the module may be connected to external element blocks outside the module.

Hereinafter, features according to each type will be described.

### Only the first and last block types (first type)

- Only the input signal of the first element block, among the element blocks configuring the module, used as the input of the module and the output signal of the last element block used as the output of the module may be connected to the external element blocks. At this point, the number of first element blocks and last element blocks may be plural. Or, the input signal of the first element block may not exist or the output signal of the last element block may not exist. Hereinafter, in other types, there may also be a plurality of first element blocks and/or last element blocks, and input signals/output signals may not exist.
- Input signals input into the module and/or output signals output from the module may be in a form simplified to the maximum, and may be used considering only the connection of the module to the external element blocks.

### All blocks without linked Type (type 2)

- A type in which all parameters that can be input by the user are added to the internal element blocks configuring the module in the first type.
- Parameters that can be input by the user among the parameters of the element blocks configuring the inside of the module may be set (i.e., some parameters among the parameters of the element blocks may be set by input values acquired from the user).
- Some input/output signals among the input/output signals of the element blocks configuring the inside of the module may be connected to the external element blocks.

### All blocks Type (3rd type)

- Signals inside the module, such as all input/output of the element blocks configuring the inside of the module, and signals for parameters that can be input by the user, may be connected to the element blocks outside the module.
- Parameters that can be input by the user for the element blocks configuring the inside of the module may be set.
- All signals of the element blocks configuring the inside of the module may be output through the output unit (e.g., through text, images, graphs, etc.) and may be used for debugging.

At this point, the first element block used for modeling of the simulation and the module and/or the last element block where the result value of the simulation is output may be one or more. When the first element block is one or more (for example, when there is a plurality of specific element blocks (laser blocks or the like)), a specific signal among one or more signals may be selected or one or more signals may be overlapped at the point where the signals input into the one or more first element blocks meet. For example, when signals input into the one or more first element blocks meet at a specific point, a specific signal among the signals input into the one or more first element blocks may be selected through a switch or the like. Or, when the signals input into the one or more first element blocks meet at a specific point, the input signals may be overlapped (for example, addition or subtraction between the signals) and transmitted to the next element block. For example, when the first element blocks that receives the input signal from the user are element block A and element block B, the signals processed by element blocks A and B may meet at a predetermined point in the modeled circuit. That is, the signals output from element blocks A and B may meet immediately or may meet by way of other element blocks. In this case, a specific signal among the two signals may be selected through a switch at the point where the two signals meet, or the two signals may be overlapped (combined, or the other signal may be subtracted from one signal) and converted into one signal through a specific element block (or operator) at the point where the two signals meet.

In the same manner, among one or more signals, a specific signal may be selected or one or more signals may be overlapped at a point where the signals input into the one or more last element blocks meet. For example, when the signals input into the one or more last element blocks meet at a specific point, a specific signal among the signals input into the one or more last element blocks may be selected by a switch or the like. Or, when the signals input into the one or more last element blocks meet at a specific point, the input signals may be overlapped (e.g., addition or subtraction between the signals) and transmitted to the next element block (in case of a module) or output. For example, when the last element blocks of simulation modeling or the module are element block A and element block B, the signals processed by element blocks A and B may meet at a predetermined point in the modeled circuit. In this case, a specific signal among the two signals may be selected through a switch at the point where the two signals meet, or the two signals may be overlapped (combined, or the other signal may be subtracted from one signal) and converted into one signal through a specific element block (or operator) at the point where the two signals meet.

The element blocks may be provided with an editor window that is configured of an area where parameter values for the operation of the element blocks are set by the user through the simulator, and an area where the values of input/output signals can be confirmed. The editor window may be displayed by combining the areas for each element block, and may be activated through a command for activation (e.g., double-clicking with the mouse). An area in which an operation (run) button for operating only an element block for which the editor window is currently open may exist in the editor window. Through the operation button, the output value corresponding to the input value of the element block may be confirmed by independently operating only the element block.

A module may have an editor window that is provided to all modules when the module is generated, and the editor window of the module may be configured of the areas described below.
① An area in which a user himself or herself may input parameter values related to the overall operation of a module, which exists in all modules regardless of the module generation type. The user may input corresponding parameters or receive parameters from an element block connected to the module or the module itself. For example, a toggle button, a check box, or the like may be used to determine whether the user inputs the parameters or the parameters are received from another element block or module. Whether the user inputs parameters or the parameters are received from another element block or module may be determined when a module is generated, and one of the two may be specified as an initial value.
② An area in which the values of input signals of internal element blocks of the module may be confirmed, and element blocks and signals that can be confirmed vary according to the module generation type.
③ An area in which a user himself or herself may input parameter values for operation of element blocks within a module, and element blocks and signals that can be confirmed vary according to the module generation type.
④ An area in which values of output signals of internal element blocks of the module can be confirmed, and blocks and signals that can be confirmed vary according to the module generation type.

Like the element block, an area in which an operation (run) button for operating only a block for which the editor window is open may exist in the editor window. Through the operation button, the output value corresponding to the input value of the element block may be confirmed by independently operating only the block.

The editor window of a module may be configured of a combination of the areas ①②③④.

The editor window of a module may vary according to the type (parameter export type) of the module. For example, in the first type, only the input signal of the first operating element block that configures the module and the output signal of the last operating element block may be output through the editor window. The module of the first type may not reset the parameters of the internal element blocks that can be set through user input. However, in the modules of the second and third types, the parameters of the internal element blocks may be reset based on the setting values input by the user.

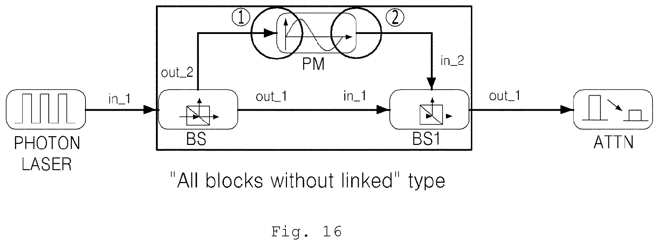

FIG. 16 is a view showing an example of a specific type of a module according to an embodiment of the present invention.

Referring to FIG. 16, in the module of a second type, only some input/output signals of the element blocks configuring the module may be output.

Specifically, in the second type, input signals/output signals connected between the element blocks configuring the module are not output, like in the first type. However, unconnected input signals and/or output signals of the element blocks configuring the module, and parameters that can be input through the User Interface (UI) can be output. In the case of the second type, input signals or output signals connected between the internal element blocks may be output according to setting of the user.

For example, since the input signal of the PM element block configuring the module of the second type shown in FIG. 16 is not connected to the out_2 signal of the BS element block inside the module, the input signal may not be output in the editor window of the module or element block (area ①). In addition, since the output signal of the PM element block in FIG. 16 is also connected to the in_2 signal of the BS1 element block inside the module, the output signal may not be output in the editor window of the module or element block (area ②).

The generated module may be registered in the toolbox list of the simulator by the user or automatically, and when it is automatically registered, it may be confirmed through the toolbox list.

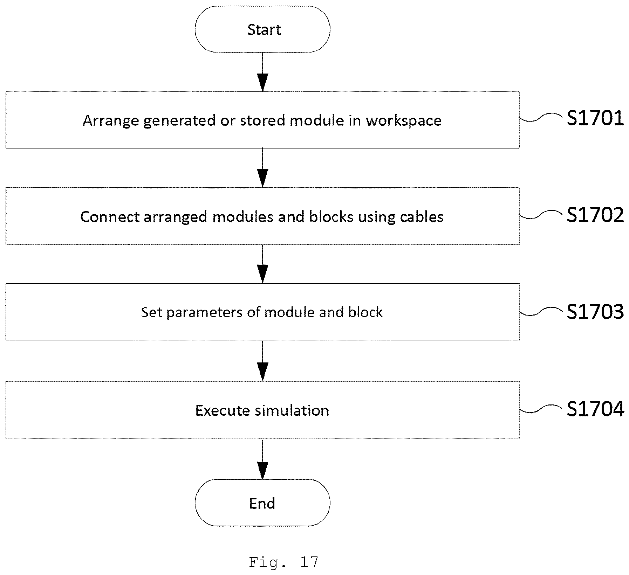

FIG. 17 is a flowchart illustrating an example of a method of using a module according to an embodiment of the present invention.

Referring to FIG. 17, the generated module may be arranged in the workspace of the simulator and used for modeling of a quantum communication circuit.

Specifically, modules generated or stored in the tool box may be arranged in the workspace (S1701). For example, modules generated or modules (or element blocks) registered in the tool box may be arranged in the workspace through a drag and drop method.

Thereafter, the arranged modules and/or element blocks may be connected through cables (S1702). When the modules and/or element blocks are connected using the cables, signals of intermediate results other than the input/output signals of the module may be connected to external element blocks according to the parameter export type of the module. For example, in the first type (only the first and last blocks Type), only the input signals of the first element block used as an input of the module among the blocks inside the module and the output signals of the last element block used as an output of the module may be connected to the external element blocks. However, in the case of the second type (All blocks without linked Type), some input/output signals of the element blocks, other than the first and last element blocks of the internal element blocks configuring the module, may be connected to the external element blocks. In the case of the third type (All blocks type), the input/output signals of all element blocks configuring the module may be connected to the element blocks outside the module through the cables.

In the arranged modules and/or element blocks, parameters may be set through the method described above (S1703).

Parameters of a module may be divided into common parameters applied to all element blocks configuring the module and parameters that can be set according to the type set when the module is generated, and the parameters may be set by values input by the user.

The common parameters applied to all element blocks configuring the module may be equally set for all element blocks on the basis of the value input by the user. The common parameters may be parameters basically applied to all modules regardless of the type that is set when the module is generated. For example, there may be parameters such as "input size", "No. of Repeat", or the like.

According to the type of the module, there may be parameters of each element block that can be set. These parameters may be parameters that can be directly input by the user for each element block. For example, there may be specific parameters corresponding to the features of each element block.

The order of performing steps S1702 and S1703 may be changed. That is, after the parameters of the arranged modules and/or element blocks are set, they may be connected through the cables.

Thereafter, a simulation may be performed by executing a model That is arranged, connected, and set with parameters (S1704).

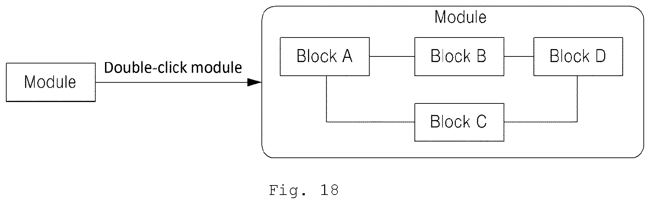

FIG. 18 is a view showing an example of a method of setting parameters of internal element blocks of a module according to an embodiment of the present invention.

Referring to FIG. 18, parameters of a module may be divided into common parameters commonly applied to all element blocks and individual parameters individually set for each element block of the module.

Specifically, when a module is generated generally as shown in FIG. 18, element blocks configuring the module may be confirmed by double-clicking on the generated module, and parameters of each element block should be set by selecting the confirmed element blocks one by one.

However, in the case of the present invention, when a generated module is double-clicked, parameters that can be set for all element blocks configuring the module are output, so that all the input signals, output signals, and/or user inputs may be output.

Accordingly, parameters of the element blocks configuring a module may be modified without directly inputting the parameters into the individual input window of the element blocks configuring the module or the editor window of the element block.

At this point, the parameters that can be set for all element blocks of the module may be output as common parameters commonly applied to all element blocks and individual parameters according to the features of the element blocks. The common parameters are set by commonly applying the values input by the user to all element blocks, and the values of the individual parameters are applied to the element block corresponding to each individual parameter. At this point, when it is desired to differently set the common parameters only for some element blocks, an input field that may separately set only the common parameters of corresponding element blocks may be generated through setting, or the common parameters may be individually set by clicking individual element blocks.

When modeling is completed through the module and element blocks, the module may be operated through a specific command in the menu bar. For example, simulation through modeling may be executed through the "Run" command in the menu bar. When the "Run" command is executed, the editor window of the controller block involved in the overall operation may be popped up. After the input parameters for executing the simulation are set through the editor window, the simulation begins when the "Run" button at the bottom of the editor window is clicked.

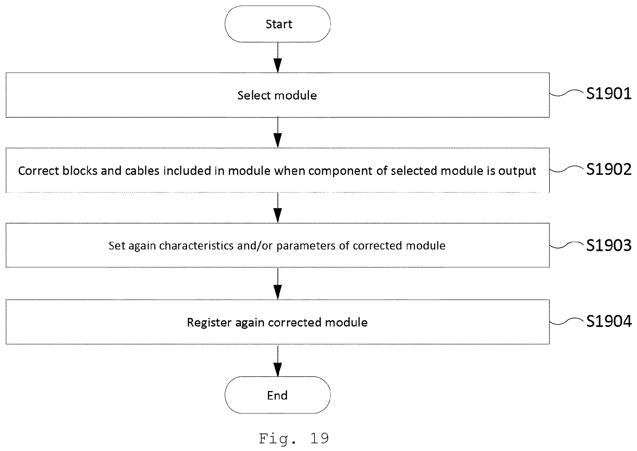

FIG. 19 is a flowchart illustrating an example of a method of modifying a module according to an embodiment of the present invention.

Referring to FIG. 19, when it is desired to change parameter values and/or types of the element blocks after a module is generated, they may be changed through a module modification procedure.

Specifically, when a module is modified, the module to be modified is selected (S1901). After moving the module to be modified from the toolbox to the workspace by dragging and dropping the module, a corresponding module may be double-clicked, or module modification may be selected from the pop-up menu after clicking the right button of the mouse. Alternatively, a module located in the toolbox may be double-clicked, or module modification may be selected from the pop-up menu after clicking the right button of the mouse.

Thereafter, when a module is selected, block elements configuring the module may be output, and element blocks and/or cables included in the module may be added/deleted to configure a new system (S1902). For example, components of the selected module (e.g., connection diagram of the element blocks in the module, layout diagram of the element block, list of characteristics, list of element block configurations, and the like) may be output through the pop-up window or the display of the selected module. When the components of the module are output, a new system may be constructed by deleting/adding element blocks and/or cables in the module. In addition, setting of the parameter of the element blocks or cables in the module may be changed.

When the change is complete, completion of the change may be indicated through the "Change Complete" button.

Thereafter, characteristics representing the features of the module in the modified module may be maintained or changed, and the type (first type, second type, or third type) of parameter input may be changed (S1903). At this point, when the type is changed, the parameters of the module may be reset. For example, when the type is changed from the first type to the second type, parameters that has not been input in the first type may be input as the type is changed to the second type. When the characteristics of the module are maintained or changed, a step for confirming this may be added for the user.

Modified modules may be registered again in the toolbox (S1904). Modified modules may be registered in the toolbox to be used later, and may be automatically registered in the same way as the module is generated, or may be registered by the user. When the modified module is registered automatically, it can be confirmed through the module folder in the list of the toolbox after the module is modified.

When a characteristic that has not been modified according to the registration criteria corresponds to the registration criteria, the registration may be duplicate, and in order to prevent duplicate registration, an existing registration may be used instead without registering a new one for the same registration criteria, and a step of confirming registration of a new one or replacement of an existing one from the user may be added at the re-registration step.

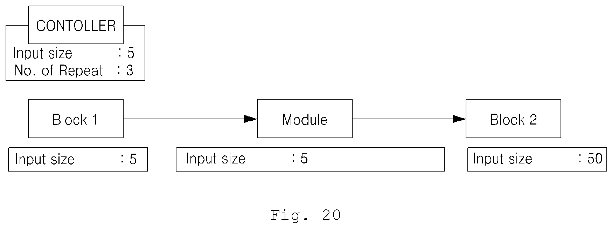

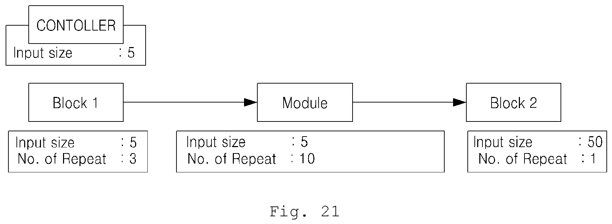

FIGS. 20 and 21 are views showing an example of a method of setting the number of repeated executions of a module according to an embodiment of the present invention.

Referring to FIGS. 20 and 21, the number of repeated executions may be individually set for each module and element block, and after the module and element block are executed as many times as the set number of repetitions, the output signal may be transmitted to the next element block and/or module connected.

Specifically, the number of repeated executions may be set differently to repeatedly execute only a specific element block or module, accumulate the results, and transmit the accumulated result to the next element block or module.

The configured element blocks, cables, modules, and the like may repeatedly perform the entire process (hereinafter, referred to as a system). For example, there may be a case where repeated execution is required, such as Monte Carlo simulation or the like. In addition, as shown in FIG. 20, a parameter such as the number of executions (No. of Repeat) may be applied across the system or may be individually applied to each element block, module, or the like as shown in FIG. 21. Alternatively, after a parameter is applied across the system, it may be individually changed and applied as needed. Alternatively, after individually applying the number of repetitions, the number of repetitions to be applied across the entire system may be set.

As shown in FIG. 20, when the number of repetitions is applied across the element blocks and modules through the No. of Repeat parameter of the controller, the result may be output or stored for each repetition, or the result may be output or stored after the repetition is completed.

Alternatively, the value of the No. of Repeat parameter may be set individually for individual element blocks and/or modules for the sake of individual setting as shown in FIG. 21.

At this point, considering complexity of implementation, the element blocks may use the same number of repetitions, and the number of repetitions may be set differently for the module. Generally, simulation may be executed in order of Block1 -> Module -> Block2 to correspond to the progress of the screen. However, when the number of repetitions is different as shown in FIG. 21, it may be difficult to execute in order of Block1 -> Module -> Block2. Accordingly, the execution order may be 3 times of Block1 -> 10 times of Module -> 1 time of Block2, i.e., after executing each element block or module as many times as the number of repetitions, the next connected element block or module may be executed.

Through the method as described above, it is possible to process after collecting as many data as is required for each element block or module.

For example, when a pulse with a length of 5 (input size: 5) is generated in Block1 in FIG. 21, the result of Block 1 is a pulse with a length of 15, and the result of Module is 150 (= 15 x 10), and therefore, a pulse with a total length of 150 may be used in Block2.

At this point, the input size may represent the input length at the time of individual execution, or it may be represented as the length of a result of a previously connected element block. A user may input the input size in each element block, or may input the input size as a whole in a controller element block. Alternatively, the input size may be input for only some element blocks directly or as a whole, and the other element blocks may receive the result of the previously connected element block and determine the input size.

When the number of repetitions is set for application across the system after applying the number of individual repetitions, Monte Carlo simulation or the like may be performed for application of the number of individual repetitions.

Although mouse clicks are described above as right click and left click for convenience of explanation, left/right clicks may be changed according to implementation and convenience of use.

As the present invention can be modified in various ways and may have various forms, specific embodiments will be illustrated in the drawings and described in detail in the specification. However, this is not to limit the present invention to a specific disclosed form, and it should be understood that it includes all modifications, equivalents, or substitutes included in the spirit and technical scope of the present invention.

The terms used in this application are used only to describe specific embodiments and are not intended to limit the present invention. Singular expressions include plural expressions unless the context clearly indicates otherwise. In this application, it should be understood that the terms "include", "have", and the like are intended to specify the presence of a feature, a number, a step, an operation, a component, part, or a combination thereof described in the specification, but do not exclude in advance the possibility of the presence or addition of one or more other features, numbers, steps, operations, components, parts, or combinations thereof.

Unless defined otherwise, all terms used herein, including technical or scientific terms, have the same meaning as commonly understood by those skilled in the art. Terms defined in commonly used dictionaries should be interpreted as having a meaning consistent with the meaning they have in the context of related arts, and will not be interpreted in an ideally or excessively formal sense unless explicitly defined in this application.

Meanwhile, the simulator technique expressed as an example of the present invention has been described in detail by the applicant of the present invention through Korean Patent Application No. 10-2021-0124408 (filing date 2021.09.16) and No. 10-2022-0015162 (filing date 2022.02.06) "Device and method for designing/verifying quantum information technology system and improving user convenience", and although the present invention does not follow the configuration of the simulator and the user convenience providing process of the patent applications as they are, they may be utilized for the purpose of understanding the technical details of the present invention, and accordingly, duplicate contents are omitted in this specification.

Although the embodiments of the present invention have been described with reference to the accompanying drawings, those skilled in the art will understand that the present invention may be implemented in other specific forms without changing the technical spirit or essential features thereof. Therefore, it should be understood that the embodiments described above are exemplary in all respects and not restrictive.

## Claims

1. A device for virtually simulating a quantum communication circuit, the device comprising:
an input unit for receiving an input value for modeling the quantum communication circuit from a user;
an output unit for outputting a model of the quantum communication circuit; and
a control unit for simulating the model of the quantum communication circuit, wherein
the control unit arranges a plurality of element blocks for modeling the quantum communication circuit on the basis of a signal input through the input unit, connects each of the plurality of element blocks through a cable, sets a plurality of parameter values of the plurality of element blocks and the cables, inputs an input value into at least one first block among the plurality of element blocks, and outputs an output value output through at least one final block among the plurality of blocks, wherein
two or more element blocks among the plurality of element blocks are grouped to configure each of one or more modules,
one or more setting values are set according to characteristics of each of the one or more modules,
the one or more setting values include a module name and a module type determined by input parameters and/or output parameters of the module, and
each of the one or more modules is connected to an element block and/or another module on the basis of the module type, the input parameters, and/or the output parameters.

2. The device according to claim 1, wherein the input value and output value of each of the one or more modules vary according to the characteristics of the two or more element blocks configuring the module.

3. The device according to claim 1, wherein the module type is one among a first type, a second type, and a third type, and the first type, the second type, and the third type are distinguished according to a method of connecting each of the one or more modules to an external element block.

4. The device according to claim 3, wherein in the first type, only an input signal of a first element block used as an input of the module among the two or more element blocks configuring the module and an output signal of a last element block used as an output of the module among the two or more element blocks are connected to the external element block.

5. The device according to claim 4, wherein the first element block and/or the last element block used as input of the module are configured of at least one element block.

6. The device according to claim 3, wherein in the second type, input signals and/or output signals that are not connected between the two or more element blocks among the two or more element blocks configuring the module are connected to the external element block, and some parameters among the parameters of the two or more element blocks are input by the user.

7. The device according to claim 3, wherein in the third type, all input signals and/or output signals of the two or more element blocks configuring the module are connected to the external element blocks, and some parameters among the parameters of the two or more element blocks are input by the user.

8. The device according to claim 1, wherein the module operates independently and outputs an output signal corresponding to an input signal.

9. The device according to claim 1, wherein the parameters of the two or more element blocks configuring the module are input by the user through one input window.

10. The device according to claim 1, wherein the number of times of repeatedly executing the one or more modules and blocks that do not configure the one or more modules among the plurality of element blocks is individually set.

11. The device according to claim 1, wherein the plurality of parameters is individually set to values input through an individual setting window in each of the plurality of element blocks, or is set through one setting window.

12. The device according to claim 11, wherein when the plurality of parameters is set through the one setting window, parameters commonly applied to the plurality of element blocks among the plurality of parameters are set to be the same through one input value.

13. The device according to claim 1, wherein the input value of each of the plurality of element blocks is input in a way set by the user.

14. The device according to claim 1, wherein each block excluding at least one first block among the plurality of element blocks is an element block selected among at least one candidate element block determined on the basis of at least one piece of information related to a previous block of each block.

15. The device according to claim 14, wherein the at least one piece of information includes at least one among parameters, an input value, and an output value of the previous block.

16. The device according to claim 1, wherein the control unit outputs an output value of an element block selected by the user among the plurality of element blocks through the output unit.

17. A system for virtually simulating a quantum communication circuit, the system comprising:
an input device for receiving an input value for modeling the quantum communication circuit from a user;
an output device for outputting a model of the quantum communication circuit;
a control device for simulating the model of the quantum communication circuit; and
a server for modeling the quantum communication circuit and storing an output value of the simulation, wherein
the control device acquires a signal input from the user through the input device, arranges a plurality of element blocks for modeling the quantum communication circuit on the basis of the acquired signal, connects each of the plurality of element blocks through a cable, sets a plurality of parameter values of the plurality of element blocks and the cables, inputs an input value into at least one first block among the plurality of element blocks, and outputs an output value output through at least one final block among the plurality of blocks, wherein
two or more element blocks among the plurality of element blocks are grouped to configure each of one or more modules,
one or more setting values are set according to characteristics of each of the one or more modules,
the one or more setting values include a module name and a module type determined by input parameters and/or output parameters of the module, and
each of the one or more modules is connected to an element block and/or another module on the basis of the module type, the input parameters, and/or the output parameters.
